# EUROPEAN PATENT SPECIFICATION

(11) **EP 4 470 838 B1**
(45) Date of publication and mention of the grant of the patent: **11.11.2026**
(21) Application number: 23175913.5
(22) Date of filing: 29.05.2023
(51) Int. Cl.: F21S 43/00, B60Q 1/26, B60Q 1/50, F21S 43/31, F21S 43/245, F21S 43/239, F21S 43/14

(54) **LIGHTING SYSTEM FOR A VEHICLE**
BELEUCHTUNGSSYSTEM FÜR EIN FAHRZEUG
SYSTÈME D'ÉCLAIRAGE POUR UN VÉHICULE

(43) Date of publication of application: 04.12.2024
(73) Proprietor: OPmobility Lighting Germany GmbH, 80807 München (DE)
(72) Inventor: JUHANAK, Michal, 742 42 Senov u Nového Jicína (CZ); STIHEL, Václav, 742 42 Senov u Nového Jicína (CZ); GROF, Jan, 742 42 Senov u Nového Jicína (CZ); BOREK, Michal, 742 42 Senov u Nového Jicína (CZ); HENDRYCH, Ale, 742 42 Senov u Nového Jicína (CZ)
(74) Representative: LLR

(56) References cited:
- DE-A1- 102018 221 711
- DE-A1- 102020 133 838
- JP-A- 2015 049 994
- US-A1- 2019 301 701

## Description

The technical field of the invention is exterior and interior lighting systems for automobiles, and more specifically application of electronic-driven colour-changeable surfaces behind transparent or semi-transparent optical parts.

### State of the art

Traditional lighting systems can assume two visual states: the system's light source is either on or off. When on, light rays are emitted, and the light system acts as a luminous sign or as an illuminating device. When off, no ray is emitted. The lighting system is visible to a person looking at the vehicle.

From US6789910B2, it is known to use a point light source and convert its ray into a line light source by means of a linear light guiding plate, and further into a plane light source by means of a plane-like light guiding plate. The upper surface of the plate-like light guiding plate is subjected to special processing so that the reflected light surface-reflected at the upper surface of the plate-like light guiding plate is incident on a reflection-type liquid crystal electro-optical device. The reflection-type liquid crystal electro-optical device can display an image which is visible to a viewer. The reflection-type liquid crystal electro-optical device is a backscreen containing the digital image. The backscreen modifies the reflection of light emitted towards the externally visible side of the system so that the image can be seen from outside, whether the system's light source is lit or unlit. In the lit state, the reflection of rays emitted by the light source is modified according to the image on the backscreen. In the unlit state, ambient light from the outside undergoes the same modification by the backscreen. Accordingly, D1 provides a way to make an image visible from the outside, whatever the lit or unlit state of the lighting system.

Further traditional lighting systems for a vehicle are known from US2019/301701A1, JP2015049994A and DE102020133838A1.

### Invention

A purpose of the invention is to provide a solution to make the lighting system appear differently, whether on or off-state. The appearance of the lighting system in the off-state can be similar to the nearby environment of the lighting system, making it less visible or even not visible on the vehicle. In a preferred embodiment, a person looking at the vehicle would not detect the presence of the lighting system. Alternatively, the appearance in the off-state can be intentionally distinct from the environment, making the lighting system remarkable for a person looking at the vehicle but not like a usual unlit lighting system. For instance, in off-state mode, the lighting system under ambient light can change its appearance, and in on-state mode, the optical output of the lighting system can slightly change because it catches and reflects, and possibly colour-influences, the light that comes out of the light guide towards the back.

An object of the invention is a lighting system for a vehicle comprising:
- a light source accommodation means provided with a light control means providing control over at least an on-state and an off-state of the light source,
- a light guide comprising a decoupling surface to exit light rays,
- a screen located next to the light guide and opposite the decoupling surface of the light guide,
- the screen has an electronically controlled colour-changeable surface configured to assume at least two colour states , wherein
- the screen is provided with screen control means providing control over the electronically controlled colour-changeable surface of the screen in a master/slave relationship with the light control means, such that when the light source is on, the screen shows one colour and that when the light source is off, the screen shows another colour.

The invention aims to give the lighting system a different appearance in lit and unlit states. Still, the invention can amplify the difference between the two states more than in a traditional lighting system, meaning that the off-state will provide another appearance than just the lighting system visible with an unlit light source.

According to a particular embodiment of the lighting system, the electronically controlled colour-changeable surface has a structure able to assume a black state and a white state.

According to a particular embodiment of the lighting system, the structure is an e-ink display.

According to a particular embodiment of the lighting system, the e-ink display is pixelized.

One advantage of the pixelization is that it is possible to create colour patterns on the surface, as in e-book readers.

According to a particular embodiment of the lighting system, the structure is segmented or pixel-based.

One advantage of having such a structure is that the screen becomes a passive display, i.e. it does not have its own background light and works only as an electronic paper that changes images that can be watched in ambient light.

For instance, on the reflective surface, there can be a picture or texture.

### Brief description of drawings

The invention will be better understood with the non-limiting examples disclosed hereafter. Drawings illustrate these examples:
- Fig.1 is a front view of a lighting system according to one embodiment.
- Fig.2 is a cut view of Fig.1 according to section II-II.
- Fig.3 is a detailed view of part III of Fig.2.
- Fig.4 is a picture of the lighting system of figures 1-3 in a lit state.
- Fig.5 is a picture of the lighting system of figure 1-3 in an unlit state.
- Fig.6 is a schematic representation of the lighting system.

### Detailed description of embodiments

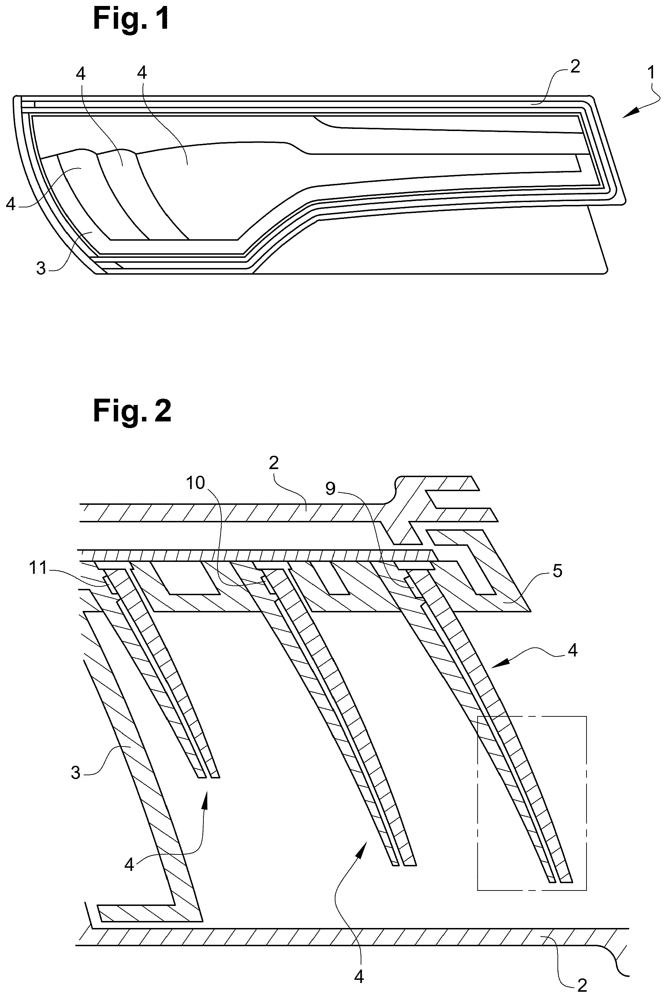

On figures 1 to 5, the lighting system is a rear lamp 1 using transparent optical part for light guiding that is designed for tail function of a car (not represented).

The lamp comprises a housing 2 which may or may not comprise a transparent front cover. In this embodiment, there is no transparent front cover. A back panel 3 closes the housing 2 opposite its front side (which is the back side of the car for a rear lamp).

The rear lamp 1 comprises three panels that are embedded in a supporting base body 5 affixed to the housing 2.

The three panels 4 have the same structure but different shapes, as can be seen on the front views of Figs. 1, 4 and 5.

In the cut view of Fig.2, one can see that the panels 4 do not extend to the same height. The same result may be obtained using three identical panels 4 laterally shifted from one another. Since each panel 4 is pear-shaped, their lateral shifting provides the same result as having panels 4 of different shapes.

Although the panels 4 have possibly different shapes, they all have the same structure: each panel is made of a front transparent planar light guide 6, a screen 7 and a background holder 8.

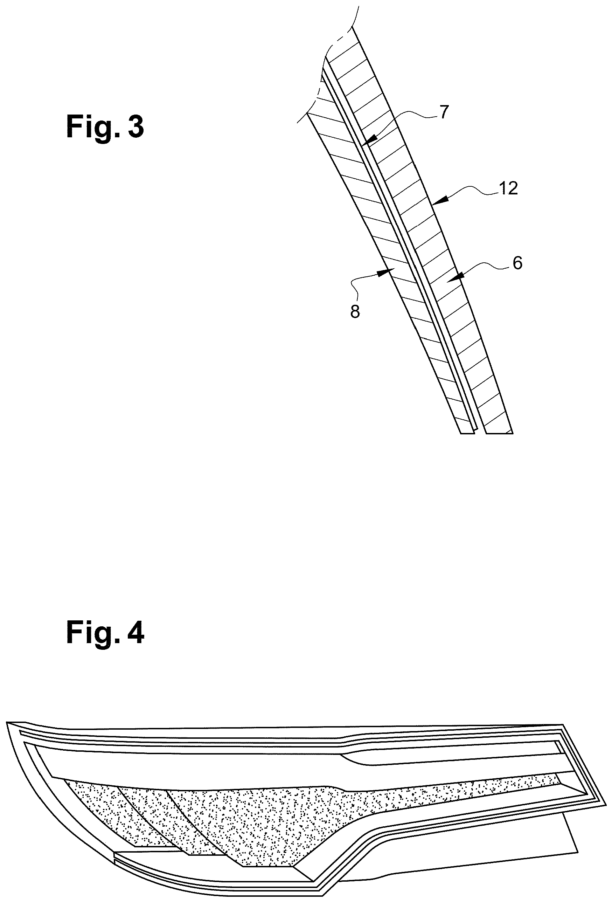

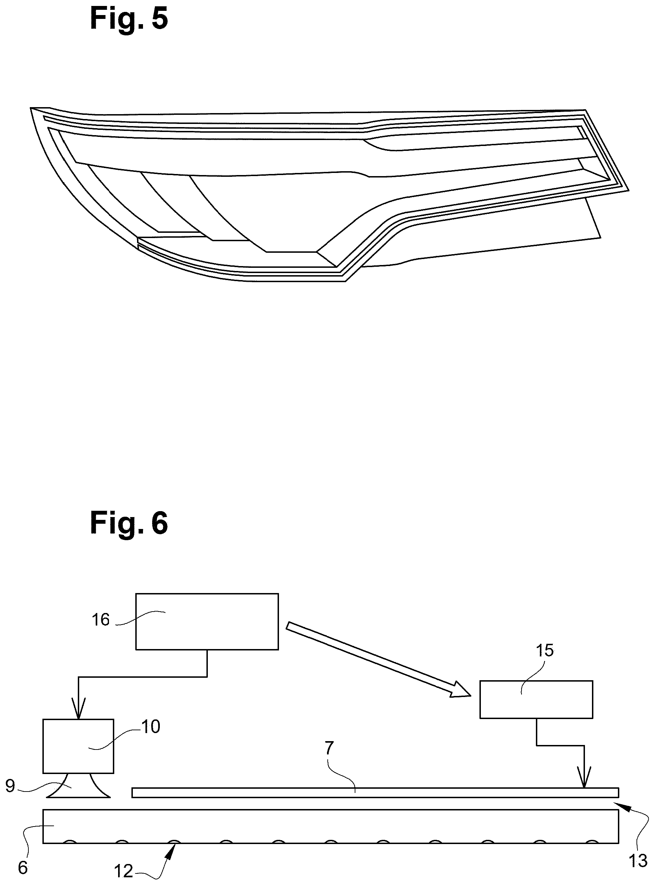

The front transparent planar light guide 6 is a transmissive cover that allows light emitted by a light source 9. In the embodiment, the light source 9 is a light emitting diode [LED]. The emitted light is visible for a viewer looking at the rear lamp 1 from a front or lateral position with respect to the car, as represented in Figs 4 and 5. The light source 9 is accommodated in a light source 9 accommodation means 10 located next to the extremity of the front transparent planar light guide 6, in the supporting base body 5. In the embodiment, the light source 9 accommodation means 10 is housed in a recess 11 of the background holder 8. The surfaces of the front transparent planar light guide 6 are treated such that the light emitted by the light emitting diode illuminates the front surface area of the front transparent planar light guide 6. In particular, the front surface of the front transparent planar light guide 6 is a decoupling surface 12, exiting light rays towards the back of the car.

The screen 7 is coloured-surface internal sheet. It has an electronically controlled colour-changeable surface 13. As an example, the electronically controlled colour-changeable surface 13 can be an E-ink foil or a liquid crystal display [LCD] foil. The screen 7 is located next to the light guide 6 and opposite its decoupling surface 12.

When the rear lamp 1 is in on-state, i.e. the light source 9 is lit, the light emitted by the light emitting diode of the front transparent planar light guide 6 illuminates the screen 7. Since the screen 7 is coloured with a visible colour - white colour in the example of Fig. 5 -, it makes the lamp more visible to a viewer located in front of the vehicle.

When the rear lamp 1 is in off-state, i.e. the light source 9 is unlit, the natural light passing through the front transparent planar light guide 6 illuminates the screen 7. Since the screen 7 is coloured with a discrete colour - grey or black colour in the example of Fig.4 -, it makes the lamp less visible to a viewer located in front of the vehicle.

Providing two different backgrounds behind the light guide 6 makes the lamp more or less remarkable, depending on its lit or unlit state.

As represented on Fig. 6, the control of the electronically controlled colour-changeable surface 13 of the screen 7 is made possible thanks to screen control means 15, which operates in a master-slave way with respect to light control means controlling the lit or unlit state of the light source 9.

In other words, the light control means 16 provides control over at least an on-state and an off-state of the light source 9, and also over the screen control means 15 which assumes at least two colour states of the screen 7. When the light source 9 is on, the screen 7 shows one colour. When the light source 9 is off, the screen 7 shows another colour. The choice of the colour depends on the expected result. If the purpose is to make the lighting system less visible in the off-state, then a dark colour or a colour close to the colour of the body of the car may be preferable. Another option could be to make the lighting system more visible and showing a decorative picture, even an animated picture.

The screen control means 15 provide control over the electronically controlled colour-changeable surface 13 of the screen 7 in a master/slave relationship with the light control means 16.

In another embodiment, it is possible to use RGB means [for example RGB E-ink]. With such a technical means, it can be achieved any kind of coloured appearance.

The invention is not limited to disclosed embodiments, but only to the appended claims.

### References used in the drawings

| **Reference** | **Designated part** |
|---|---|
| 1 | Rear lamp |
| 2 | Housing |
| 3 | Back panel |
| 4 | Panels |
| 5 | Supporting base body |
| 6 | Light guide |
| 7 | Screen |
| 8 | Background holder |
| 9 | Light source |
| 10 | Accommodation means |
| 11 | Recess |
| 12 | Decoupling surface |
| 13 | Electronically controlled colour-changeable surface |
| 15 | Screen control means |
| 16 | Light control means |

## Claims

1. Lighting system for a vehicle comprising:
- a light source accommodation means (10) provided with a light control means (16) providing control over at least an on-state and an off-state of the light source (9),
- a light guide (6) comprising a decoupling surface (12) to exit light rays,
- a screen (7) located next to the light guide (6) and opposite the decoupling surface (12) of the light guide (6),
- the screen (7) has an electronically controlled colour-changeable surface (13) configured to assume at least two colour-states , **characterized in that**
- the screen (7) is provided with screen control means (15) providing control over the electronically controlled colour-changeable surface (13) of the screen (7) in a master/slave relationship with the light control means (16), such that when the light source is on, the screen shows one colour and that when the light source is off, the screen shows another colour.

2. Lighting system according to claim 1, wherein the electronically controlled colour-changeable surface (13) has a structure able to assume a black state and a white state.

3. Lighting system according to claim 2, wherein the structure is an e-ink display.

4. Lighting system according to claim 3, wherein the e-ink display is pixelized.

5. Lighting system according to any one of claims 2, 3 and 4, wherein the structure is segmented or pixel-based.

## Patentansprüche

1. Beleuchtungssystem für ein Fahrzeug, umfassend:
- ein Lichtquellen-Aufnahmemittel (10), das mit einem Lichtsteuermittel (16) bereitgestellt ist, das eine Steuerung über mindestens einen Ein-Zustand und einen Aus-Zustand der Lichtquelle (9) bereitstellt,
- einen Lichtleiter (6), der eine Entkopplungsfläche (12) zum Austritt von Lichtstrahlen umfasst,
- einen Bildschirm (7), der sich neben dem Lichtleiter (6) und gegenüber der Entkopplungsfläche (12) des Lichtleiters (6) befindet,
- wobei der Bildschirm (7) eine elektronisch gesteuerte, farbwechselbare Fläche (13) aufweist, die dazu ausgebildet ist, mindestens zwei Farbzustände anzunehmen,
**dadurch gekennzeichnet, dass**
- der Bildschirm (7) mit Bildschirmsteuermitteln (15) vorgesehen ist, die eine Steuerung über die elektronisch gesteuerte, farbwechselbare Fläche (13) des Bildschirms (7) in einer Master-Slave-Beziehung mit dem Lichtsteuermittel (16) bereitstellen, so dass der Bildschirm, wenn die Lichtquelle eingeschaltet ist, eine Farbe zeigt und dass der Bildschirm, wenn die Lichtquelle ausgeschaltet ist, eine andere Farbe zeigt.

2. Beleuchtungssystem nach Anspruch 1, wobei die elektronisch gesteuerte, farbwechselbare Fläche (13) eine Struktur aufweist, die in der Lage ist, einen schwarzen Zustand und einen weißen Zustand anzunehmen.

3. Beleuchtungssystem nach Anspruch 2, wobei die Struktur ein E-Ink-Display ist.

4. Beleuchtungssystem nach Anspruch 3, wobei das E-Ink-Display pixelisiert ist.

5. Beleuchtungssystem nach einem der Ansprüche 2, 3 und 4, wobei die Struktur segmentiert oder pixelbasiert ist.

## Revendications

1. Système d'éclairage pour un véhicule, comprenant :
- des moyens de logement de source lumineuse (10) muni de moyens de commande d'éclairage (16) permettant de commander au moins un état allumé et un état éteint de la source lumineuse (9),
- un guide de lumière (6) comprenant une surface de découplage (12) pour la sortie des rayons lumineux,
- un écran (7) situé à proximité du guide de lumière (6) et en regard de la surface de découplage (12) du guide de lumière (6),
- l'écran (7) présente une surface (13) à couleur variable commandée électroniquement, configurée pour prendre au moins deux états de couleur, **caractérisé en ce que**
- l'écran (7) est muni de moyens de commande d'écran (15) assurant la commande de la surface à couleur variable commandée électroniquement (13) de l'écran (7) dans une relation maître/esclave avec les moyens de commande de lumière (16), de sorte que lorsque la source lumineuse est allumée, l'écran présente une couleur et que lorsque la source lumineuse est éteinte, l'écran présente une autre couleur.

2. Système d'éclairage selon la revendication 1, dans lequel la surface (13) à couleur variable commandée électroniquement a une structure capable de prendre un état noir et un état blanc.

3. Système d'éclairage selon la revendication 2, dans lequel la structure est un écran à encre électronique.

4. Système d'éclairage selon la revendication 3, dans lequel l'écran à encre électronique est pixellisé.

5. Système d'éclairage selon l'une quelconque des revendications 2, 3 et 4, dans lequel la structure est segmentée ou à base de pixels.
